# EUROPEAN PATENT APPLICATION

(11) **EP 1 580 462 A2**
(43) Date of publication of application: **28.09.2005**
(21) Application number: 05006479.9
(22) Date of filing: 24.03.2005
(51) Int. Cl.: F16H 59/10

(54) **A selector apparatus of an automatic transmission of vehicle**

(30) Priority: 25.03.2004 JP 2004089722
(71) Applicant: KABUSHIKI KAISHA ATSUMITEC, Shizuoka-ken (JP)
(72) Inventor: Suzuki, Takayuki, Hamana-gun Shizuoka-ken (JP); Oda, Shigeaki, Hamana-gun Shizuoka-ken (JP)
(74) Representative: Cohausz & Florack

(57) **Abstract**

A selector apparatus of an automatic transmission of vehicle which can suppress increase of backlash of teeth of the gear arrangement of the lever bracket and the select-link to improve good operability of the selector lever. According to the present invention, there is provided a selector apparatus of an automatic transmission of vehicle comprising: brackets 1a and 1b to be secured on a body of vehicle; a selector lever 2 pivotally supported on the brackets 1a and 1b; a lever bracket 3 arranged at a base end of the selector lever 2 and formed with sector gear teeth 3a; and a selector-link 4 for actuating a transmission via a wire W interposed between the selector-link 4 and the transmission formed with sector gear teeth 4a mating with the sector gear teeth 3a of the lever bracket 3 and rotated by the pivotal motion of the selector lever 2 characterized in that: there is provided an urging means 7 and 8 for urging the select-link 4 toward the lever bracket 3 so that the teeth 4a of the select-link 4 are brought close to the teeth 3a of the lever bracket.

## Description

### BACKGROUND OF THE INVENTION

### Field of the Invention

The present invention relates to a selector apparatus of an automatic transmission of vehicle for carrying out the shifting operation of the transmission by transmitting the pivotal motion of the selector lever to a select-link via a gear arrangement.

### Description of Background Art

In general, a selector apparatus having a selector lever operated by a driver is provided on a vehicle having an automatic transmission and the selector lever can be pivotally moved, for example, to a parking position (P), a reverse position (R), a neutral position (N) and a drive position (D). The base end of the selector lever is provided with a lever bracket which has an aperture for pivotal shaft of the selector lever and is connected to the automatic transmission via a push-pull wire.

Various structures of the selector apparatus have been required to be adapted to many limitations in layout in the interior of vehicle for satisfying desires of users. Accordingly, in Japanese Laid-open Patent Publication No. 315070/1995 there is proposed a selector apparatus provided with a gear arrangement for corresponding the shifting direction of the selector lever and the moving direction of the push-pull wire.

In the selector apparatus of the prior art, a lever bracket is formed with teeth of a sector gear and a select-link is also provided with a sector gear having teeth mating with that of the sector gear of the lever bracket. The select-link is pivotally mounted on a bracket similarly to the selector lever and connected by a push-pull wire extending to an automatic transmission. The transmission can be actuated by a driver operating the selector lever via the sector gear arrangement and the push-pull wire.

However, there is a problem in the selector apparatus of an automatic transmission of vehicle of the prior art in that a large backlash in mesh of teeth of the lever bracket and the select-link and thus the operability of the selector lever is deteriorated.

### SUMMARY OF THE INVENTION

It is, therefore, an object of the present invention to provide a selector apparatus of an automatic transmission of vehicle which can suppress increase of backlash of teeth of the gear arrangement of the lever bracket and the select-link to improve good operability of the selector lever.

For achieving the object above, there is provided, according to the present invention of claim 1, a selector apparatus of an automatic transmission of vehicle comprising: brackets to be secured on a body of vehicle; a selector lever pivotally supported on the brackets; a lever bracket arranged at a base end of the selector lever and formed with sector gear teeth; and a selector-link for actuating a transmission via a wire interposed between the selector-link and the transmission formed with sector gear teeth mating with the sector gear teeth of the lever bracket and rotated by the pivotal motion of the selector lever characterized in that: there is provided an urging means for urging the select-link toward the lever bracket so that the teeth of the select-link are brought close to the teeth of the lever bracket.

It is preferable, as in claim 2, a surface of the select-link against which the urging means abuts is formed with wavy irregularities each corresponding to one position of the selector lever.

### Effects of the invention

According to the invention of claim 1, since the urging means usually urges the select-link toward the lever bracket so that the teeth of the select-link are brought close to the teeth of the lever bracket, it is possible to suppress increase of backlash of teeth of the gear arrangement of the lever bracket and the select-link and thus to improve good operability of the selector lever.

According the inventions of claim 2, since a surface of the select-link against which the urging means abuts is formed with wavy irregularities each corresponding to one position of the selector lever, it is possible to provide a driver of vehicle with "shift-click feeling" in pivotal motion of the selector lever. Accordingly this enables to eliminate provision of any additional means for generating "shift-click feeling" in anywhere of the selector apparatus and thus to simplify the structure of the selector apparatus.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a perspective view showing a selector apparatus of an automatic transmission of vehicle of one preferred embodiment of the present invention;
Fig. 2 is a side elevation view of the selector apparatus of Fig. 1 with one of brackets being removed;
Fig. 3 is a cross-sectional view taken along a line III-III of Fig. 2;
Fig. 4 is a schematic view showing a positional relation among a lever bracket, a select-link and an urging means of the selector apparatus;
Fig. 5 is a schematic view showing a configuration of apertures through which pivotal shaft of the select-link passes.

### DESCRIPTION OF THE PREFERRED EMBODIMENTS

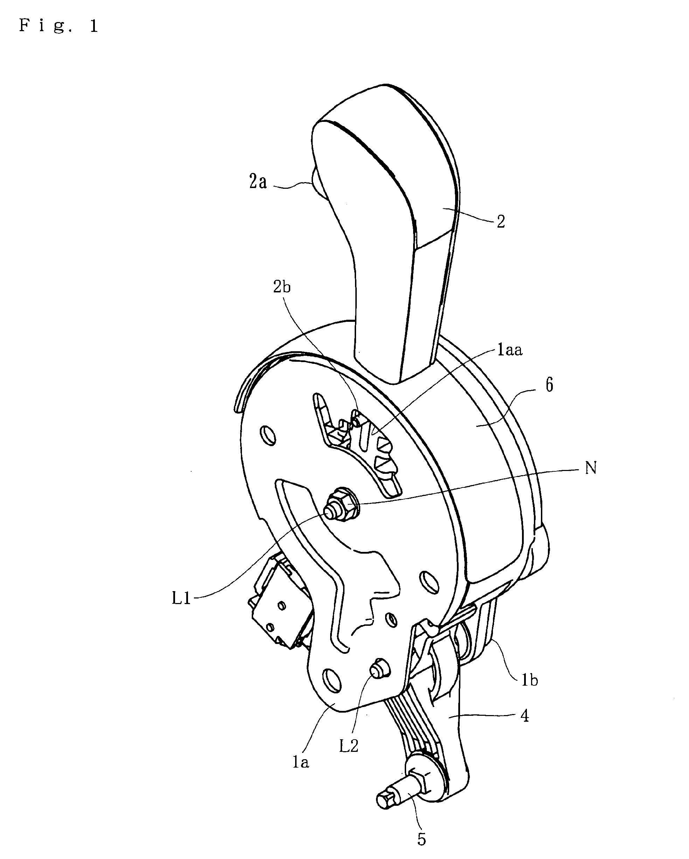

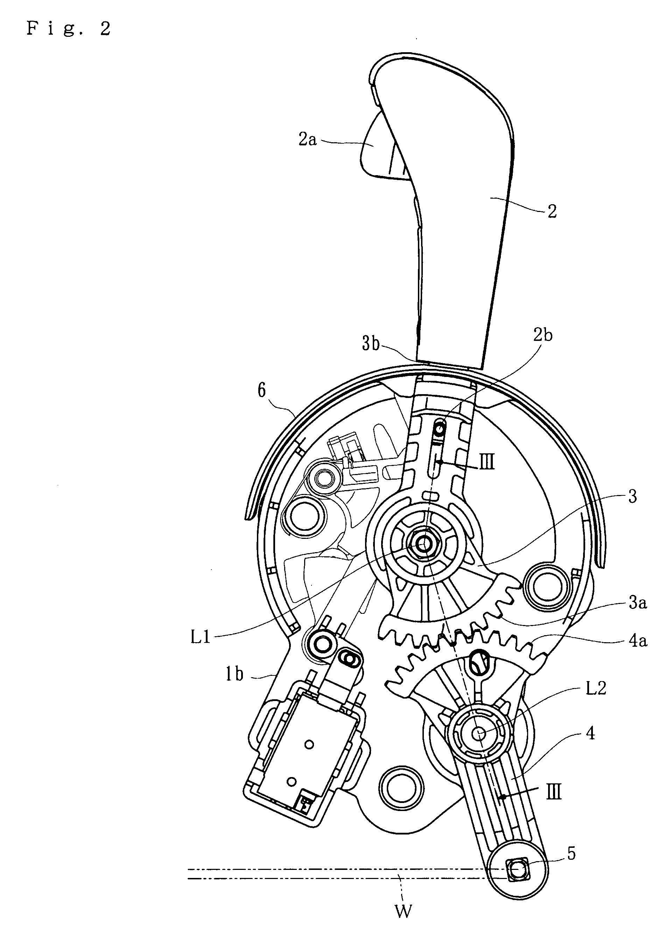

A preferred embodiment of the invention will be described with reference to accompanied drawings.
A selector apparatus of an automatic transmission of vehicle of the present invention is a type which can select any driving position of an automatic transmission by transmitting the pivotal motion of a selector lever to a select-link via sector gears and generally comprises, as shown in Fig. 1, brackets 1a and 1b to be secured on a body of vehicle, a selector lever 2 pivotally supported within the brackets 1a and 1b, a lever bracket 3 (see Fig.2) mounted on the base end of the selector lever 2, and a select-link 4.

The bracket 1a is formed by a metal sheet member and formed with a erroneous operation preventing window 1aa having a configuration according to positions of the selector lever 2 as well as apertures for passing therethrough shafts L1 and L2 respectively of the selector lever 2 and select link 4. The bracket 1a is combined to a bracket 1b to form a box structure of the selector apparatus to be mounted on a body of vehicle.

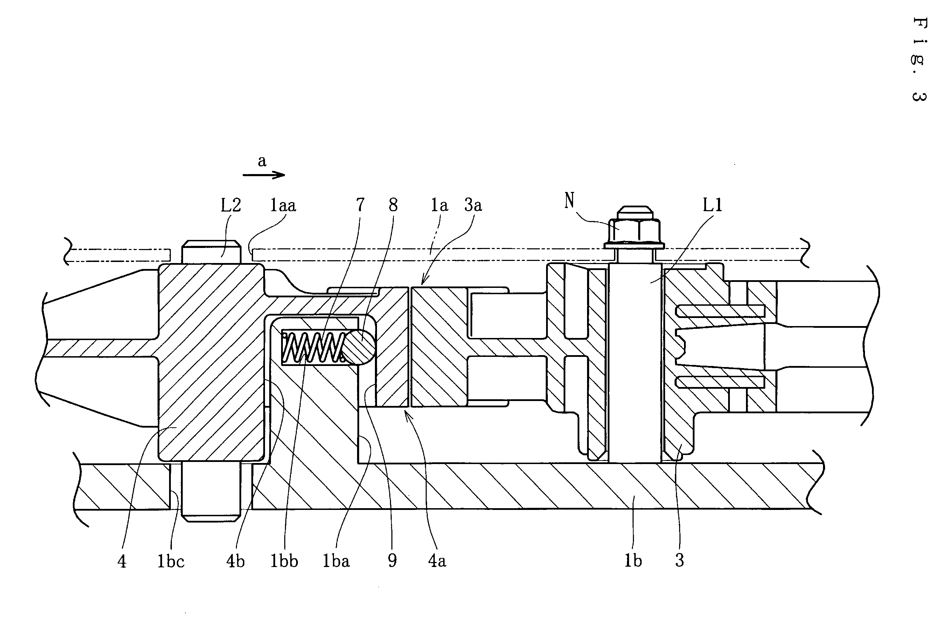

The bracket 1b has a secured shaft L1 and a floating shaft L2 for pivotally supporting the lever bracket 3 and the select-link 4 respectively and is formed with a projected portion 1ba (see Fig. 3) extending toward the bracket 1a (i.e. inside the selector apparatus). A bore 1bb opened toward the lever bracket 3 is formed in the projected portion 1ba at a region near the end of the projected portion 1ba. The bore 1bb can accommodate a detent spring 7 and a ball 8 forming an urging means. The end of the shaft L1 is formed with a screw thread on which a nut N is fastened after the lever bracket 3 and a select-link 4 etc. are assembled onto the bracket 1b via the bracket 1a. On the contrary, the shaft L2 is integrated with the select-link 4 and allowed to be moved a slight distance.

The selector lever 2 pivotally operated by a driver of vehicle has a push knob 2a (see Fig. 2) at its top end and is connected, at its bottom end, to the lever bracket 3 via a lever pipe (not shown). A rod lock pin (not shown) is arranged within the lever pipe and a lock pin 2b engaging said erroneous operation preventing window 1aa is passed through the rod lock pin and the lever bracket 3.

When the selector lever 2 is in the parking position (P), the lock pin 2b engages the erroneous operation preventing window 1aa and prevent the selector lever 2 from being shifted toward the reverse position (R). In such a case, if pushing down the push knob 2a, the rod lock pin 7 is moved downward and thus the locking by the lock pin 2b is released. Thus the selector lever 2 is allowed to be pivoted from the parking position (P) to the reverse position (R).

Similarly, pivotal motion of the selector lever 2 is prevented unless the push knob 2a is pushed down in cases of shifting the selector lever 2 from the reverse position (R) to the parking position (P), from the neutral position (N) to the reverse position (R), and from the drive position (D) to the second speed position (2).

The lever bracket 3 is arranged at the bottom end (base end) of the selector lever 2 and is able to pivot around the shaft L1 together with the selector lever 2. The lever bracket 3 is also formed with teeth 3a of a sector gear at a position lower than the shaft L1.

Similarly to the lever bracket 3, the select-link 4 is also pivotable around the shaft L2 and also formed, at its top end, with teeth 4a of a sector gear mating with the teeth 3a of sector gear of the lever bracket 3. The bottom end of the select-link 4 is provided with an end bolt 5 for connecting a push-pull wire W is passed (see Figs. 2).

The pivotal motion of the selector lever 2 is transmitted to the select-link 4 via the sector gears thereof and thus the automatic transmission is operated via the push-pull wire W. In this case, the direction of the pivotal motion of the selector lever 2 is same as the moving direction of wire W. A reference numeral 6 in Figs. 1 and 2 denotes a selector lever cover and the cover 6 moves together with the selector lever 2 passed through an aperture 6a formed substantially at the center of the cover 6a.

In the selector apparatus of the present invention, the select-link 4 is formed with a recess 4b for accommodating the projected portion 1b extending from the bracket 1b as best shown in Fig.3. In addition, the inner surface of the recess 4b at a side near the lever bracket 3 is formed with wavy irregularities 9 each corresponding to one position of the selector lever 2. The ball 8 urged by the detent spring 7 always abuts and urges the wavy irregular surface 9.

More particularly, the ball 8 fits into any one recessed portion of the wavy irregularities 9 when the selector lever 2 is positioned at any one of positions (e.g. parking, reverse or drive position etc.) and firmly holds the selector lever 2 at the selected position. During the shift of the selector lever 2 from one position to the other adjacent position, the ball 8 rides over the peak of one wavy irregular portion 9 and then fall down the valley thereof. This provides a driver of vehicle with "shift-click feeling" during the operation of the selector lever 2.

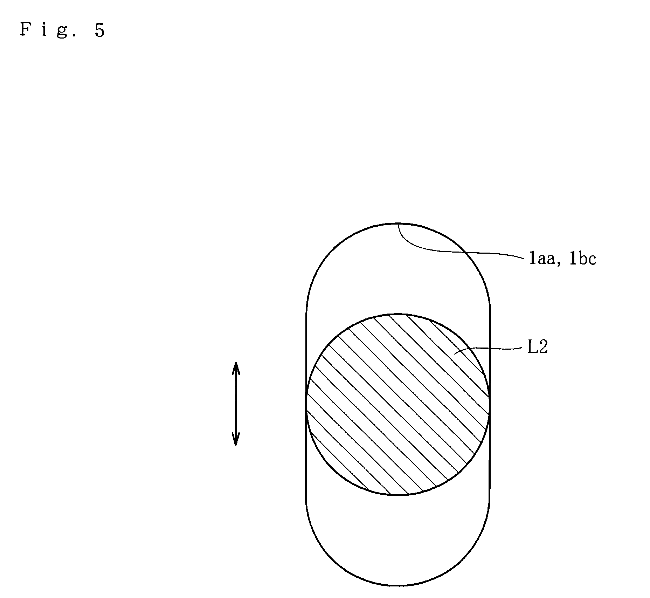

Apertures 1aa and 1bc respectively of the bracket1a and 1b through which the shaft L2 is passed has an elongated configuration as shown in Fig. 5. The major axis of the elongated apertures 1aa and 1bc is set so that it lies on a line connecting the shafts L1 and L2 so as to allow the select-link 4 to slightly displace toward the lever bracket 3 as shown by an arrow in Fig. 5.

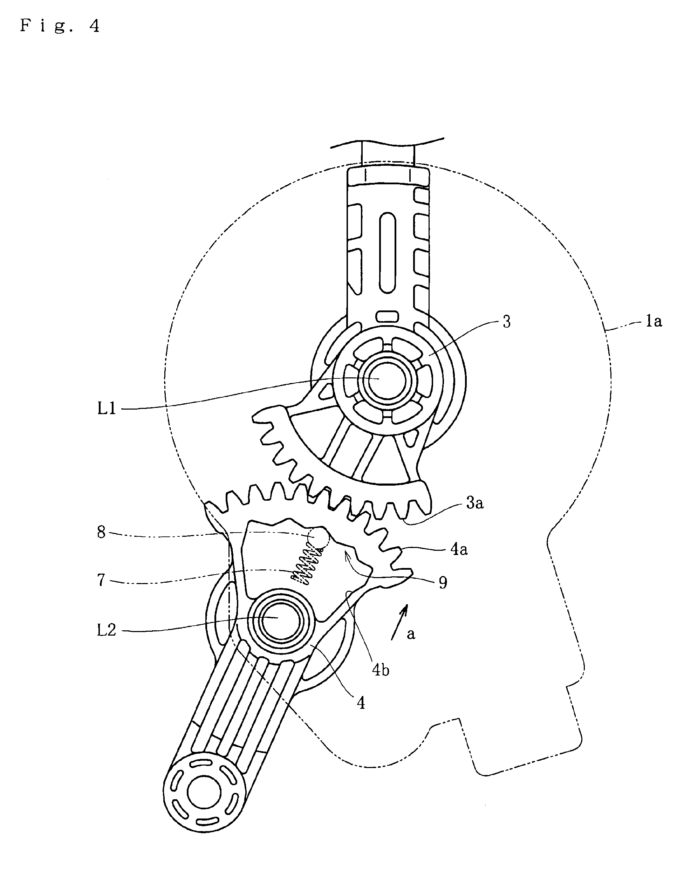

Thus the select-link 4 is always urged toward the lever bracket 3 (i.e. a direction shown by an arrow "a" in Figs. 3 and 4) by the ball 8 urged by the detent spring 7 supported by the bracket 1b so that the teeth 4a of the select-link 4 are urged toward the teeth 3a of the lever bracket 3.

Thus the generation of large backlash between the teeth 3a and 4a of the lever bracket 3 and the select-link is suppressed and the operability of the selector lever 2 can be improved. In addition, since a surface of the select-link 4 against which the ball 8 (urging means) abuts is formed with wavy irregularities 9 each corresponding to one position of the selector lever 2, it is possible to provide a driver of vehicle with "shift-click feeling" in pivotal motion of the selector lever. Accordingly this enables to eliminate provision of any additional means for generating "shift-click feeling" in anywhere of selector apparatus and thus to simplify the structure of the selector apparatus.

Although the present invention has been described with reference to the preferred embodiment, the present invention is not limited to this embodiment. For example, additional means for generating "shift-click feeling" may be provided in anywhere of the selector apparatus as same as prior art. In this case the surface with which the spring loaded ball 8 contacts may be changed to a smooth circular surface in stead of the wavy irregularities 9.

Furthermore, other urging means (e.g. elastic plastic member or rib, leaf spring etc. extending from the projected portion 1ba to the wall of the recess 4b) may be used in place of the detent spring 7 and the ball 8. In addition, although it is shown in the preferred embodiment that the urging means is provided on the bracket 1b, it may be possible to provide it on the bracket 1a.

In addition, it is possible, in place of providing the recess 4b, to provide a projection on the select-link 4 onto which the urging force is applied. In this case it is preferable to arrange the projection near the teeth 4a so as to enable the urging force to be effectively transmitted.

The elongated apertures 1aa and 1bc shown in the preferred embodiment may be changed to round apertures having a diameter slightly larger than that of the shaft L2 so as to be formed a small gap therebetween.

For example, the present invention can be applied to those having brackets 1a and 1b or selector lever 2 of different configuration. Of course, the present invention can be also applied to a selector apparatus having any type of parking lock mechanism.

### Applicability in industry

The present invention can be applied to any selector apparatus having a different outline configuration or additional function so long as it has the urging means for urging the teeth of the select-link toward the teeth of the lever bracket.

## Claims

1. A selector apparatus of an automatic transmission of vehicle comprising:
brackets (1a and 1b) to be secured on a body of vehicle;
a selector lever (2) pivotally supported on the brackets (1a and 1b);
a lever bracket (3) arranged at a base end of the selector lever (2) and formed with sector gear teeth (3a); and
a selector-link (4) for actuating a transmission via a wire (W) interposed between the selector-link (4) and the transmission formed with sector gear teeth (4a) mating with the sector gear teeth (3a) of the lever bracket (3) and rotated by the pivotal motion of the selector lever (2) **characterized in that**:
there is provided an urging means (7, 8 and 9) for urging the select-link (4) toward the lever bracket (3) so that the teeth (4a) of the select-link (4) are brought close to the teeth (3a) of the lever bracket (3).

2. A selector apparatus of an automatic transmission of vehicle of claim 1 wherein a surface of the select-link (4) against which the urging means (8) abuts is formed with wavy irregularities (9) each corresponding to one position of the selector lever (2).
